# EUROPEAN PATENT APPLICATION

(11) **EP 4 790 320 A1**
(43) Date of publication of application: **12.08.2026**
(21) Application number: 26156294.6
(22) Date of filing: 04.02.2026
(51) Int. Cl.: F24C 7/08, G01H 1/00, H05B 6/12

(54) **COOKING APPLIANCE AND CONTROL METHOD THEREOF**

(30) Priority: 05.02.2025 KR 20250014578
(71) Applicant: LG Electronics Inc., Yeongdeungpo-gu Seoul 07336 (KR)
(72) Inventor: SHIN, Myeong Jun, Seoul 07796 (KR); YANG, Jaekyung, Seoul 07796 (KR); KWAG, Dongseong, Seoul 07796 (KR); MOON, Hyunwook, Seoul 07796 (KR)
(74) Representative: Schott, Jakob Valentin

(57) **Abstract**

Disclosed herein is a cooking appliance. The cooking appliance includes a heating unit (30, 31, 33, 35) configured to heat a heating target placed on a top plate (20), and a sensor (110) configured to generate a signal by detecting vibrations generated in the top plate (20) , and is characterized by controlling the operation of the heating unit (30, 31, 33, 35) by reflecting knock input information identified based on the signal generated by the sensor (110).

## Description

### TECHNICAL FIELD

The present disclosure relates to a cooking appliance, and more particularly, to a cooking appliance including a cooktop.

### BACKGROUND

A cooking appliance is one of the home appliances for cooking food, and is an appliance installed in a kitchen area and used for cooking food according to the user's intention. Such cooking appliances can be classified in various ways depending on the heat source, shape, and type of fuel used.

In classifying cooking appliances by the way of cooking, they can be classified into open-type and closed-type cooking appliances, depending on the type of space where food is placed. Closed-type cooking appliances include ovens, microwave ovens, etc., while open-type cooking appliances include cooktops, hobs, etc.

Closed-type cooking appliances are designed to prevent heat from escaping to the outside, thereby offering the advantage of cooking foods evenly and reducing cooking times. In contrast, open-type cooking appliances allow users to directly check and adjust the cooking process, thereby enabling flexible adaptation to various dishes.

Among open-type cooking appliances, cooktops are provided to heat food contained in cooking vessels via at least one or more burners. These cooktops may be provided in a form equipped with burners that utilize electricity, or may be provided in a form equipped with burners that utilize gas. Further, a cooktop can be implemented as a standalone unit, as well as in the form of an oven range including an oven beneath the cooktop.

A cooktop may include a control panel, which may be provided with various buttons, etc., for adjusting the operation of the cooktop. In addition, the control panel may also be provided with a display, etc., that shows the operating states of the cooktop.

On the cooktop, the on/off state, heat level, operating time, etc., of the burners can be adjusted by the operation of knobs, buttons, etc., provided on the control panel. For example, a user can select the burner to use by pressing a burner selection button provided on the control panel and adjust the heat level of the burner by pressing a heat level adjustment button.

When cooking using a cooktop, cases where a user wants to adjust the operation of the burners in the middle of cooking occur frequently. For example, cases where a user attempts to operate the control panel in order to adjust the heat level of a burner or activate a new burner while preparing food ingredients occur frequently in the middle of cooking.

However, if a user operates the control panel with hands contaminated with food ingredients, seasonings, etc., not only will the control panel become contaminated, but the likelihood of the occurrence of a malfunction of the cooking appliance will also increase.

### SUMMARY

### Technical Problems

One objective of the present disclosure is to provide a cooking appliance that allows the operation of a cooking appliance to be adjusted by methods other than control panel operation.

In addition, another objective of the present disclosure is to provide a cooking appliance that allows the operation of a cooking appliance to be effectively adjusted even with contaminated hands.

In addition, yet another objective of the present disclosure is to provide a cooking appliance that allows the performance of a sensor for detecting a knock input to be exerted effectively.

In addition, still another objective of the present disclosure is to provide a cooking appliance that can simplify the wiring structure connected to the sensor for detecting a knock input.

### Technical Solutions

A cooking appliance, which is one embodiment of the present disclosure for achieving the above objectives, includes a heating unit configured to heat a heating target placed on a top plate, and a sensor configured to generate a signal by detecting vibrations generated in the top plate, and is characterized by controlling the operation of the heating unit by reflecting knock input information identified based on the signal generated by the sensor.

Through this, the present disclosure can improve the aesthetic appearance of the front of the cooking appliance by covering a certain portion of the gap between the door and the control panel.

In addition, another form of the present disclosure includes a heating unit configured to heat a heating target placed on a top plate, and a sensor configured to generate a signal by detecting vibrations generated as a result of a user tapping the top plate, and is characterized by controlling the operation of the heating unitbased on information identified by the signal generated by the sensor.

A cooking appliance according to one aspect of the present disclosure may include: a cooktop case having a receiving space formed therein; a top plate disposed above the cooktop case and covering the receiving space; a heating unit having at least a portion thereof disposed in the receiving space and configured to heat a heating target placed on the top plate; a sensor configured to generate a signal by detecting vibrations generated in the top plate; and a control unit configured to control operation of the heating unit by reflecting knock input information identified based on the signal generated by the sensor.

In addition, the heating unit may include at least one heating coil.

In addition, with respect to a horizontal direction, the sensor may be disposed between a side wall of the cooktop case and the heating coil, or may be disposed between a plurality of the heating coils.

In addition, with respect to a horizontal direction, the sensor may be disposed between a side wall of the cooktop case and the heating unit, or may be disposed between a plurality of the heating units arranged in the horizontal direction.

In addition, it is preferable that a pair of the heating units be disposed to be spaced apart in a lateral direction, and with respect to the lateral direction, the sensor be disposed between the pair of heating units.

In addition, the present disclosure may further include an electrical component disposed between a pair of the heating units disposed to be spaced apart by a predetermined distance in a lateral direction.

In addition, it is preferable that the sensor be disposed in a space surrounded by the pair of heating units and the electrical component.

In addition, the present disclosure may further include a control panel disposed further forward than at least one of a pair of the heating units disposed to be spaced apart in a lateral direction.

In addition, it is preferable that the sensor be disposed in a space surrounded by the pair of heating units and the control panel.

In addition, the present disclosure may further include an electrical component disposed between a pair of the heating units disposed to be spaced apart by a predetermined distance in a lateral direction.

In addition, the control panel may be disposed further forward than the electrical component.

In addition, it is preferable that the sensor be disposed in a space surrounded by the pair of heating units, the electrical component, and the control panel.

In addition, it is preferable that, with respect to a front-rear direction, the sensor be disposed at a position closer to the control panel than to a center in the front-rear direction of the receiving space.

In addition, the present disclosure may further include a sensor case supporting the sensor.

In addition, it is preferable that at least a portion of the sensor case be in close contact with the top plate.

In addition, the sensor case may include a horizontal surface portion disposed between the sensor and the top plate so as to block.

In addition, it is preferable that the sensor be connected to the sensor case below the horizontal surface portion.

In addition, the present disclosure may further include an attachment material that brings at least a portion of the horizontal surface portion into close contact with the top plate and attaches the sensor case to the top plate.

In addition, the sensor case may further include a groove portion disposed to surround the horizontal surface portion on an outer side in the horizontal direction.

In addition, it is preferable that the groove portion be formed in a shape where a portion of the upper surface of the horizontal surface portions is recessed downward.

In addition, it is preferable that the attachment material include a sealant that is filled into a space formed between the groove portion and the top plate and is attached to the sensor case and the top plate.

In addition, the sensor case may include a case body connected to the sensor, and contact protrusions protruding from the case body toward the top plate.

In addition, it is preferable that vibrations generated in the top plate be transmitted to the case body via the contact protrusions in contact with the top plate.

In addition, it is preferable that the contact protrusions be disposed between the top plate and the horizontal surface portion, and space at least a portion of the horizontal surface portion from the top plate and contact the top plate.

In addition, it is preferable that a plurality of the contact protrusions, each provided to be in close contact with the top plate, be disposed to be spaced apart by a predetermined distance along the horizontal direction.

In addition, the present disclosure may further include a supporter installed in the cooktop case and supporting the sensor case.

In addition, it is preferable that at least a portion of the sensor case be in close contact with the top plate between the supporter and the top plate.

In addition, the present disclosure may further include an elastic member configured to press the sensor case toward the top plate so that at least a portion of the sensor case can be brought into close contact with the top plate.

In addition, it is preferable that the elastic member include a coil spring supported by the supporter and elastically supporting the sensor case.

In addition, the supporter may include a supporter body installed in the cooktop case, and a support rod protruding upward from the supporter body.

In addition, it is preferable that the support rod be fitted into the coil spring, allowing stretch and compression in an up-down direction of the coil spring and constraining movement in a horizontal direction of the coil spring.

In addition, the sensor case may include a case body connected to the sensor, and a lifting support portion movably coupled to the support rod and supporting the case body on the supporter to be raisable and lowerable.

In addition, it is preferable that the support rod be fitted into the lifting support portion, allowing the lifting support portion to be raised and lowered and constraining movement in a horizontal direction of the lifting support portion.

In addition, it is preferable that a lower portion of the coil spring be supported by the supporter, and an upper portion of the coil spring be coupled to the support rod or support the support rod upward.

In addition, the supporter may include a supporter body installed in the cooktop case, and a support wall protruding upward from the supporter body.

In addition, the sensor case may include a projecting portion coupled to the support wall.

In addition, it is preferable that the projecting portion be inserted into a hook slot formed in the support wall, and be coupled to the support wall to be raisable and lowerable.

In addition, it is preferable that an upward movement of the projecting portion be restricted as the projecting portion gets caught on an inner upper surface of the support wall inside the hook slot.

In addition, it is preferable that the sensor case be coupled to the supporter so as to be movable in a direction closer to or further away from the top plate.

In addition, the sensor case may include a plurality of lifting support portions configured to movably couple the sensor case to the supporter.

In addition, it is preferable that each of the lifting support portions be movably coupled to the supporter on an outer side in a horizontal direction of the sensor.

In addition, it is preferable that the plurality of lifting support portions be disposed symmetrically in a front-rear direction or a lateral direction or symmetrically in both the front-rear direction and the lateral direction, around the sensor.

In addition, it is preferable that the plurality of elastic members be disposed symmetrically in the front-rear direction or the lateral direction or symmetrically in both the front-rear direction and the lateral direction, around the sensor.

In addition, it is preferable that the sensor be disposed on the control panel.

In addition, the control panel may include a circuit board and a panel case housing the circuit board, and

In addition, it is preferable that the sensor case be disposed to be connected to the panel case or be formed integrally with the panel case.

### Advantageous Effects

The present disclosure can provide an operation control function by a knock input. Such a cooking appliance can provide users with further enhanced convenience by allowing various functions of the cooking appliance to be controlled with a simple knock input operation only.

In addition, the present disclosure enables users to effectively adjust the operation of the cooking appliance even with contaminated hands in the middle of cooking by allowing the functions of the cooking appliance to be controlled with a simple knock input operation only.

The present disclosure can reduce the possibility of the occurrence of malfunctions of the cooking appliance due to incorrect operation of the control panel. Further, the present disclosure can effectively improve the convenience and safety of cooking appliances by allowing users to quickly and effectively respond to urgent situations resulting from overheating of cooking vessels, food boiling over, or the like.

In addition, the present disclosure can effectively reduce the risk of the occurrence of malfunction and damage to the sensor by having the sensor disposed in a region that is close to the typical knock input point and that is also maintained at a low temperature, and can ensure that the performance of the sensor for detecting a knock input is exerted effectively, thereby providing a high level of knock detection performance.

In addition, the present disclosure can provide the effect of simplifying the wiring connection structure between the sensor and the main PCB and effectively shortening the wiring length as well by having the sensing module disposed in a region very close to the control panel.

### BRIEF DESCRIPTION OF DRAWINGS

The accompanying drawings constitute a part of the specification, illustrate one or more embodiments in the disclosure, and together with the specification, explain the disclosure, wherein:
FIG. 1 is a perspective view showing a cooking appliance according to a first embodiment of the present disclosure.
FIG. 2 is a plan cross-sectional view showing the internal structure of the cooking appliance shown in FIG. 1.
FIG. 3 is a bottom view showing the internal structure of the cooking appliance shown in FIG. 1.
FIG. 4 is a configuration diagram schematically showing the configuration of a home appliance according to one embodiment of the present disclosure.
FIG. 5 is an enlarged view enlarging and showing a sensing module according to the first embodiment.
FIG. 6 is an exploded perspective view showing a disassembled state of the sensing module shown in FIG. 5.
FIG. 7 is a plan view of the sensing module shown in FIG. 5.
FIG. 8 is a front cross-sectional view showing the internal structure of the sensing module shown in FIG. 5.
FIG. 9 is a view schematically showing the connection state between the sensor and the control panel shown in FIG. 5.
FIG. 10 is an enlarged view enlarging and showing a sensing module according to a second embodiment of the present disclosure.
FIG. 11 is an exploded perspective view showing a disassembled state of the sensing module shown in FIG. 10.
FIG. 12 is a front cross-sectional view showing the internal structure of the sensing module shown in FIG. 10.
FIG. 13 is a view schematically showing the connection state between the sensor and the control panel shown in FIG. 10.
FIG. 14 is a plan view showing the internal structure of a cooking appliance according to a third embodiment of the present disclosure.
FIG. 15 is an enlarged view enlarging and showing the control panel and the sensing module shown in FIG. 14.
FIG. 16 is an exploded perspective view showing a disassembled state of the control panel and the sensing module shown in FIG. 15.
FIG. 17 is a cross-sectional view along the line "17-17" in FIG. 15.
FIG. 18 is a cross-sectional view along the line "18-18" in FIG. 15.

### DETAILED DESCRIPTION

The above-described objectives, features, and advantages will be described in detail below with reference to accompanying drawings, and accordingly, those having ordinary skill in the art to which the present disclosure pertains will be able to readily embody the technical ideas of the present disclosure. In describing the present disclosure, if specific descriptions of known technologies related to the present disclosure are deemed to unnecessarily obscure the gist of the present disclosure, the detailed descriptions will be omitted. Hereinafter, preferred embodiments in accordance with the present disclosure will be described in detail with reference to the accompanying drawings. In the drawings, the same reference numerals are used to indicate identical or similar components.

Although terms such as "first," "second," etc., are used to describe various components, these components are not limited by such terms, as a matter of course. These terms are used merely to distinguish one component from another, and surely, a first component may also be a second component, unless otherwise specified.

The present disclosure is not limited to the embodiments disclosed below, but may be modified in various ways and implemented in a variety of different forms. The present embodiments are provided solely to ensure the present disclosure is complete and to fully inform those skilled in the art of the scope of the disclosure. Therefore, it should be understood that the present disclosure is not limited to the embodiments disclosed below, but includes not only substituting or adding the configuration of one embodiment to that of another embodiment, but also all modifications, equivalents, and alternatives that fall within the technical ideas and scope of the present disclosure.

The accompanying drawings are merely intended to facilitate understanding of the embodiments disclosed herein; the technical ideas disclosed herein are not limited by the accompanying drawings, and it should be understood that they encompass all modifications, equivalents, and alternatives falling within the spirit and technical scope of the present disclosure. The components in the drawings may be exaggerated or reduced in size or thickness in light of ease of understanding or the like; however, this should not be construed as limiting the scope of protection of the present disclosure.

The terms used herein are used only to describe particular implementations or embodiments and are not intended to limit the present disclosure. Further, singular expressions include plural expressions, unless the context explicitly dictates otherwise. Terms such as "include" and "consist of" herein are intended to specify the presence of features, numbers, steps, operations, components, parts, or combinations thereof described herein. In other words, it should be understood that terms such as "include" and "consist of" herein do not preclude the possibility of the presence or addition of one or more other features, numbers, steps, operations, components, parts, or combinations thereof.

Terms containing ordinal numbers, such as "first," "second," and the like, may be used to describe various components, but these components are not limited by such terms. These terms are used solely for the purpose of distinguishing one component from another.

When a component is said to be "connected" or "coupled" to another component, it is to be understood that it may be directly connected or coupled to said another component, but that other components may also be present in between. In contrast, when a component is said to be "directly connected" or "directly coupled" to another component, it is to be understood that there are no other components present in between.

When a component is said to be "on" or "under" another component, it is to be understood that it may not only be disposed directly on or under said another component, but that other components may also be present in between.

Unless otherwise defined, all terms used herein, including technical or scientific terms, have the same meaning as commonly understood by those having ordinary skill in the art to which the present disclosure pertains. Terms such as those defined in commonly used dictionaries should be interpreted as having a meaning consistent with their meaning in the context of the relevant art, and shall not be construed in an idealized or overly formal sense unless explicitly defined in the present application.

In the state where a cooking appliance is placed on the floor, the direction in which a door is installed relative to the center of the cooking appliance is defined as a forward direction. Therefore, the direction toward the interior of the cooking appliance with the door open becomes a rearward direction. For convenience, these forward and rearward directions can be referred to as a first direction. Then, the forward direction can be referred to as one direction of the first direction, and the rearward direction can be referred to as the other direction of the first direction.

In addition, the gravitational direction can be defined as a downward direction, and the direction opposite to the gravitational direction can be defined as an upward direction.

Furthermore, the horizontal direction perpendicular to the front-rear direction of the cooking appliance, i.e., the width direction of the cooking appliance when viewing the cooking appliance from the front of the door of the cooking appliance, can be referred to as a left-right direction. For convenience, the left-right direction can be referred to as a second direction. Then, the right side can be referred to as one direction of the second direction, and the left side can be referred to as the other direction of the second direction.

Moreover, the width direction of the cooking appliance may also be referred to as a lateral direction. Then, the right side can be referred to as one side of the lateral direction, and the left side can be referred to as the other side of the lateral direction.

In addition, an up-down direction can be referred to as a third direction. Then, the upward direction can be referred to as one direction of the third direction, and the downward direction can be referred to as the other direction of the third direction.

Furthermore, the up-down direction described above can be referred to as a vertical direction. Then, the front-rear direction and the left-right direction, i.e., the first direction and the second direction, can be referred to as the horizontal direction.

Throughout the specification, "A and/or B" denotes A, B, or A and B, unless otherwise specified, and "C to D" denotes C or greater and D or less, unless otherwise specified.

### [Overall Structure of Cooking Appliance]

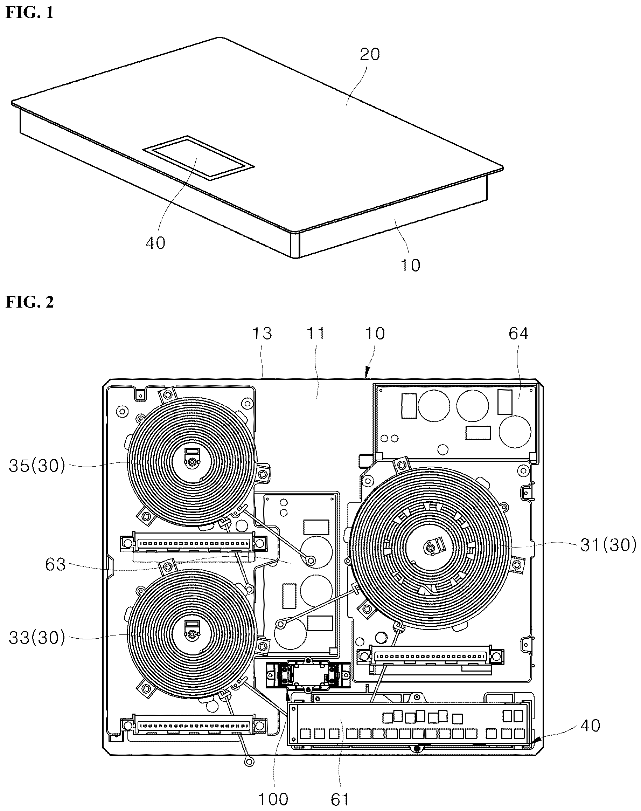

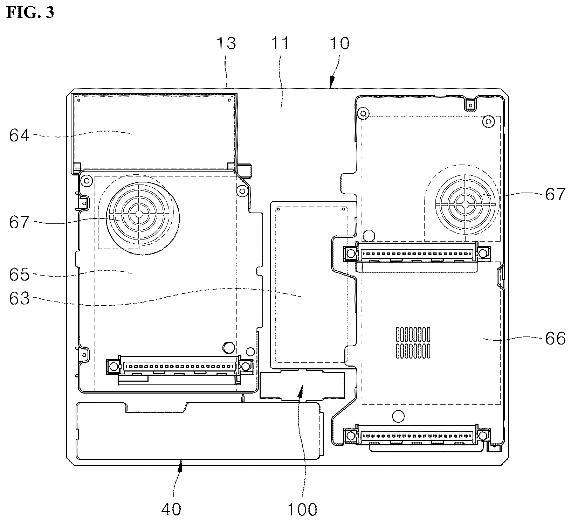

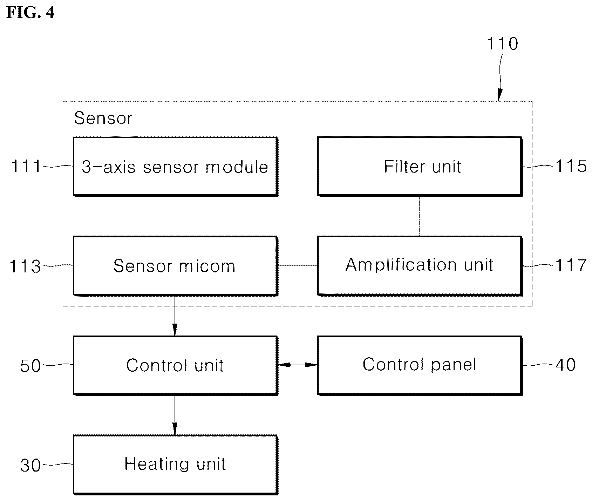

FIG. 1 is a perspective view showing a cooking appliance according to a first embodiment of the present disclosure, and FIG. 2 is a plan cross-sectional view showing the internal structure of the cooking appliance shown in FIG. 1. Further, FIG. 3 is a bottom view showing the internal structure of the cooking appliance shown in FIG. 1, and FIG. 4 is a configuration diagram schematically showing the configuration of a home appliance according to one embodiment of the present disclosure.

Referring to FIGS. 1 to 4, the cooking appliance may include a cooktop case 10 and a top plate 20. According to the present embodiment, the exterior of the cooking appliance may be formed by the cooktop case 10 and the top plate 20. The cooktop case 10 may be disposed below the top plate 20, and may form the front, rear, side, and bottom surfaces of the cooking appliance provided in the form of a cooktop. The top plate 20 may be disposed at the upper end of the cooking appliance, and may form the exterior of the upper surface of the cooking appliance.

A receiving space can be formed inside the cooktop case 10. The receiving space formed inside the cooktop case 10 can be opened toward the top side. As one example, the cooktop case 10 may be formed in a hexahedral shape with the top side open. Various internal parts that make up the cooking appliance can be housed in the receiving space enclosed by the top plate 20 and the cooktop case 10.

According to the present embodiment, the cooktop case 10 may include a bottom portion 11. The bottom portion 11 can form the lower surface of the cooktop case 10 and define the lower boundary surface of the receiving space. The bottom portion 11 can be disposed below the top plate 20 and form a plane parallel to the top plate 20.

In addition, the cooktop case 10 may include a side wall portion 13. The side wall portion 13 can form the front surface, rear surface, and both side surfaces of the cooktop case 10, and can be formed in the shape of a vertical wall extending upward from the edges of the bottom portion 11. This side wall portion 13 can define the horizontal boundary surfaces of the receiving space.

In addition, the cooking appliance may be provided with a heating unit 30 for heating food to be cooked or a vessel containing the food (hereinafter referred to as "heating target"). The cooking appliance may be provided with at least one or more heating units 30. For example, each heating unit 30 may be provided in a form including a heating coil or heating wire coil that uses electricity.

As one example, at least a portion of the heating unit 30 can be disposed in the receiving space. For example, the heating unit 30 can be disposed within the space enclosed by the cooktop case 10 and the top plate 20, and can be disposed below the top plate 20. This heating unit 30 can heat a heating target placed on the top plate 20.

The present embodiment exemplifies that the cooking appliance is provided in the form of an induction heating cooking appliance. The heating unit 30 of this cooking appliance may be provided in a form that includes a heating coil. The heating unit 30 containing the heating coil in this way can be operated by a high-frequency current applied by an inverter and can generate strong magnetic field lines.

The magnetic field lines generated by the heating unit 30 containing the heating coil in this way generate eddy currents in the vessel, heat is generated and the vessel can be heated as the eddy currents flow through the vessel, and the food held in the vessel can be heated as the vessel is heated.

In addition, the cooking appliance of the present embodiment can have a control panel 40. The control panel 40 can be disposed on the top plate 20. This control panel 40 can be provided with an operating unit including various switches for adjusting the operation of the cooking appliance. Further, the control panel 40 can be further provided with a display or the like that shows the operating states of the cooking appliance.

As one example, at least a portion of the control panel 40 can be disposed in the receiving space. For example, the control panel 40 can be disposed within the space enclosed by the cooktop case 10 and the top plate 20, and can be disposed below the top plate 20. This heating unit 30 can heat a heating target placed on the top plate 20.

In addition, according to the present embodiment, the control panel 40 can be disposed at a position offset further forward than the heating units 30 provided in the cooking appliance. For example, with respect to the front-rear direction, the control panel 40 can be disposed between the foremost one of the heating units 30 and the front surface of the cooktop case 10. That is, the control panel 40 can be disposed at a position very close to the front surface of the cooking appliance.

The control unit 50 is provided to be able to control the operation of the cooking appliance. For example, the control unit 50 can control the operation of the heating unit 30 and the like based on operation signals input via the display, input unit, etc., of the control panel 40. Further, the control unit 50 can also control the operation of the display that shows the operating states of the cooking appliance.

Various electrical components can be installed inside the cooking appliance, i.e., in the receiving space. The electrical components disposed in the receiving space may be at least one of a main PCB 61, a power processing unit, and a coil control unit, and can be provided in the form of a circuit board electrically connected to the heating coil of the heating unit 30.

For example, the main PCB is provided for overall operation control of the cooking appliance, and can be disposed on the control panel 40. In addition, the power processing unit is provided to supply power to the heating coil, and the power processing unit may include a switching mode power supply (SMPS), a noise filter (EMI filter) 63, etc. Further, the coil control unit is provided to control the operation of the heating coil, and the coil control unit may include an inverter PCB 65, and the like.

In addition, a cooling fan 67 may be provided inside the cooking appliance. The cooling fan 67 serves to cool the electrical components by introducing external air into the cooktop case 10 and supplying it to the receiving space. As one example, the cooling fan 67 may be disposed below the inverter PCB 65, and this cooling fan 67 can effectively cool high-heat-generating parts such as IGBTs, etc., provided on the inverter PCB 65.

The external air introduced into the cooktop case 10 by the cooling fan 67 can cool the electrical components in the receiving space, and can then be discharged to the outside of the cooking appliance via an exhaust port formed on the side or rear surface of the cooktop case 10. The present embodiment exemplifies that the exhaust port is disposed on the rear surface of the cooktop case 10.

### [Overall Structure of Sensing Module]

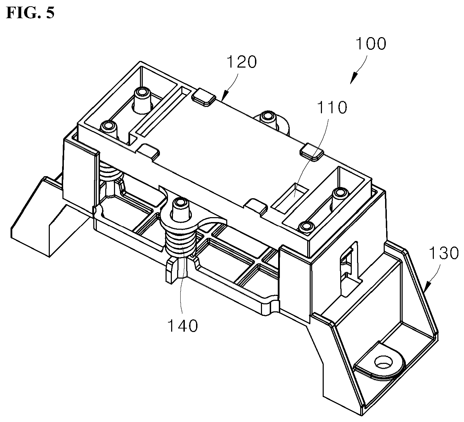

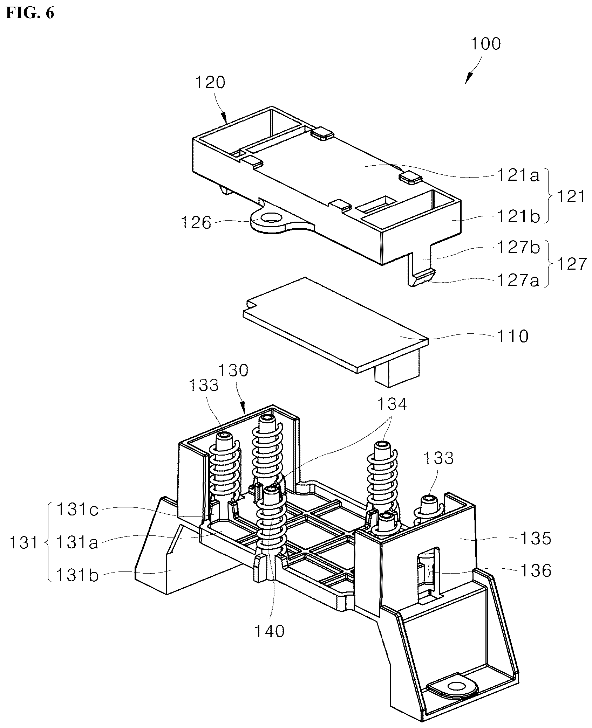

FIG. 5 is an enlarged view enlarging and showing a sensing module according to the first embodiment, and FIG. 6 is an exploded perspective view showing a disassembled state of the sensing module shown in FIG. 5.

Referring to FIGS. 2 to 5, the cooking appliance of the present embodiment may further include a sensing module 100. The sensing module 100 may include a sensor 110. The sensor 110 can detect vibrations generated in the top plate 20 and generate a signal. This sensor 110 can detect vibrations generated as a result of the user tapping the top plate 20 and generate a signal corresponding to the detection result.

In addition, the sensing module 100 may further include a sensor case 120, as shown in FIGS. 4 to 6. The sensor case 120 is provided to be able to support the sensor 110. At least a portion of the sensor case 120 can be in close contact with the top plate 20. The sensor 110 can be connected to the top plate 20 via this sensor case 120.

In addition, the sensing module 100 may further include a supporter 130. The supporter 130 can be installed in the cooktop case 10 and support the sensor case 120. For example, the supporter 130 can be coupled to the bottom portion 11 of the cooktop case 10, and the sensor case 120 can be supported by the supporter 130 between the supporter 130 and the top plate 20.

In addition, the sensing module 100 may further include an elastic member 140. The elastic member 140 can press the sensor case 120 toward the top plate 20 so that at least a portion of the sensor case 120 can be in close contact with the top plate 20. For example, the elastic member 140 can elastically press the sensor case 120 upward, thereby allowing at least a portion of the sensor case 120 to be in close contact with the top plate 20.

### [Sensor]

According to the present embodiment, the control unit 50 can control the operation of the heating unit 30 by reflecting the knock input information identified based on the signal generated by the sensor 110. For example, the sensor 110 detects vibrations generated as a result of the user tapping the top plate 20 and generates a signal, and the control unit 50 can control the operation of the heating unit 30 by reflecting the information identified by the signal generated by the sensor 110.

As one example, the sensor 110 can detect a vibration detection signal corresponding to vibrations, and determine whether a knock has been input based on the detected vibration detection signal. For example, the sensor 110 can determine that a knock has been applied if vibration detection signals greater than or equal to a preset threshold are detected continuously at regular time intervals.

In addition, vibrations caused by a knock can occur only in a first axial direction of the three axial directions. For example, vibrations caused by a knock can occur only in the direction of one of the x-axis, y-axis, and z-axis. Taking this into account, in order to determine whether vibrations are caused by a knock, it may be necessary to identify, by which direction of the vibrations, the detected vibration detection signal was caused.

As another example, the sensor 110 can compare the pattern of the vibration detection signal caused by a knock with the pattern of the actually detected vibration detection signal, and determine whether the vibrations are caused by a knock based on this comparison result.

The pattern of the vibration detection signal caused by a knock (hereinafter referred to as "preset knock signal") can be set in advance. The sensor 110 can compare the pattern of the actually detected vibration detection signal with the pattern of the preset knock signal, and determine whether the vibrations are caused by a knock based on this comparison result.

The sensor 110 can detect vibrations transmitted in all directions. As one example, the sensor 110 may include a vibration sensor having a plurality of axes. The sensor 110 including such a vibration sensor can detect vibrations transmitted in a plurality of axial directions.

That is, the sensor 110 of the present embodiment can detect vibrations corresponding to a knock in a manner of detecting vibrations transmitted in the three axial directions and combining vibration detection signals corresponding to the vibrations in these three axial directions.

The sensor 110 may include a 3-axis sensor module 111 and a sensor micom 113.

As one example, the 3-axis sensor module 111 may include a single 3-axis accelerometer that simultaneously detects vibrations transmitted in three mutually orthogonal axial directions. The 3-axis accelerometer can detect the three axial components of acceleration with a single sensor. Such a 3-axis accelerometer can detect minute changes in the movement (acceleration) of the medium due to vibrations, respectively, with respect to the three mutually orthogonal axial directions.

In this case, it is preferable that the 3-axis accelerometer be installed so that any one of the three axial directions coincides with the direction of the vibrations caused by the knock. By having the 3-axis accelerometer installed in this way, the detection accuracy of the sensor 110 for knock vibrations can be further enhanced.

As another example, the 3-axis sensor module 111 may be provided in a form including three independent accelerometers. As yet another example, the 3-axis sensor module 111 may also be provided in a form including four or more independent accelerometers. As the number of accelerometers increases, the accuracy of vibration detection performed by the sensor 110 can be improved.

In this case, it is preferable that at least one of the plurality of accelerometers be installed such that the direction of the axis along which that accelerometer detects vibrations coincides with the direction of the vibrations caused by the knock. When the alignment between the vibrations caused by the knock and the direction of one of the three axes is achieved in this way, the detection accuracy of the sensor 110 for the knock vibration can be further enhanced.

As still another example, a 1-axis accelerometer that detects vibrations in one axial direction, or a 2-axis accelerometer that detects vibrations in two axial directions, may also be applied to the sensor 110. In this case, the sensor 110 needs to be installed such that the direction of the vibrations caused by the knock applied to the door coincides with the axial direction of the accelerometer.

In addition, the sensor 110 may further include a filter unit 115. The vibration detection signal detected by the sensor 110 may include unnecessary noise in addition to the vibration detection signal resulting from the knock input. The filter unit 115 can serve to remove this noise.

In addition, the sensor 110 may further include an amplification unit 117. The signal output after its noise is removed by the filter unit 115 can be amplified by the amplification unit 117. The amplified signal can then be input to the sensor micom 113.

The sensor micom 113 may be configured separately from the control unit 50. This sensor micom 113 can determine whether the vibrations detected by the sensor 110 are vibrations caused by a knock input by the user, based on the signal output from the amplification unit 117. If the vibrations are determined to be the vibrations caused by the knock input by the user, the sensor micom 113 can transmit information related thereto to the control unit 50.

For example, the sensor micom 113 can determine whether the vibrations are caused by a knock based on the result of comparing the pattern of the vibration detection signal generated by the 3-axis sensor module 111 and the pattern of the preset knock signal.

This sensor micom 113 can extract a vibration detection signal in a set first direction out of the vibration detection signals in the three axial directions, and determine whether the vibrations are caused by a knock by using the extracted vibration detection signal in the first direction. This is because the vibrations caused by a knock occur in an arbitrary first direction.

In addition, the sensor micom 113 can determine that the vibrations detected by the sensor 110 are vibrations caused by a knock if a vibration detection signal in the first direction is input at a magnitude greater than or equal to a preset first threshold, and then a vibration detection signal in the same input direction is input within a set time range at a magnitude greater than or equal to a preset second threshold.

This is because knocks are generally applied in a "knock-knock" form, and the vibrations corresponding to "knock-knock" typically appear as signals of greater magnitude compared to vibrations caused by other sources. Therefore, if the vibration detection signals corresponding to "knock-knock" are greater than or equal to the first and second thresholds, respectively, the sensor micom 113 can determine that the vibrations detected by the sensor 110 are vibrations caused by knocks.

In addition, the sensor micom 113 can extract a vibration detection signal in any one axial direction (first axial direction) that coincides with the direction of the vibrations caused by the knock out of the vibration detection signals in the three axial directions, and can determine whether the vibrations are caused by the knock based on the result of comparing the extracted vibration detection signal with the vibration detection signals in the other two axial directions (second and third axial directions).

For example, the sensor micom 113 can determine that the vibrations detected by the sensor 110 are not vibrations caused by a knock if the maximum value of the vibration detection signal in at least one of the second axial direction or third axial direction is greater than the maximum value of the vibration detection signal in the first axial direction.

When a signal corresponding to vibrations caused by a knock (hereinafter referred to as a "knock-on signal") is received from the sensor 110, more specifically from the sensor micom 113, the control unit 50 can control the operation of the heating unit 30 by reflecting the knock input information contained in this signal.

According to the present embodiment, the 3-axis sensor module 111 and the sensor micom 113 can be mounted on a single PCB board, and can be configured as a sensor 110 in the form of an integral module together with the PCB board. Further, if the sensor 110 additionally includes the filter unit 115 and the amplification unit 117, it may be configured as a sensor 110 in the form of an integral module in which the 3-axis sensor module 111, sensor micom 113, filter unit 115, and amplification unit 117 are mounted on a single PCB board.

By having the sensor 110 implemented in the form of an integral module in this way, the installation of the sensor 110 can be easily performed, and the setting of the installation position of the sensor 110 can be diversified.

### [Sensor Case]

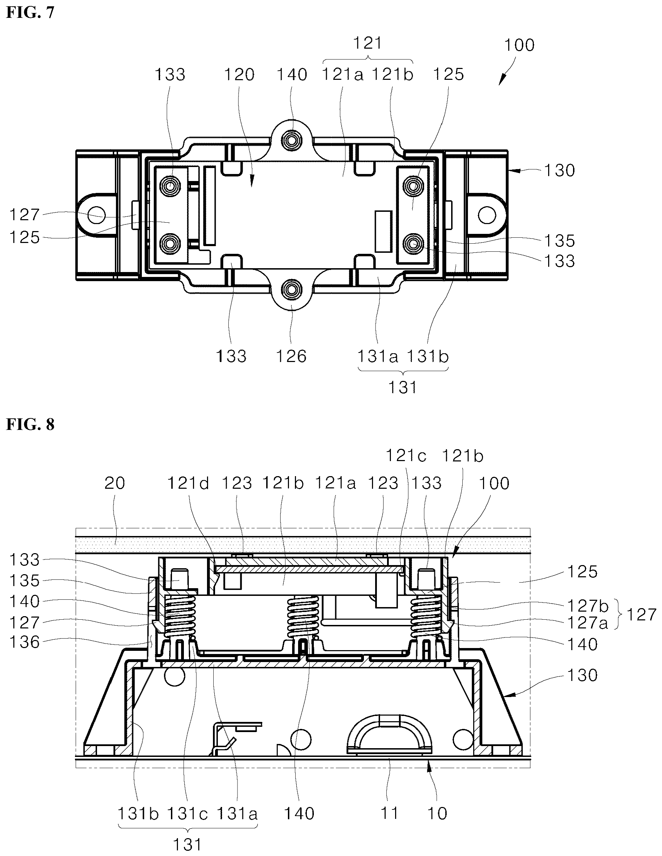

FIG. 7 is a plan view of the sensing module shown in FIG. 5. Further, FIG. 8 is a front cross-sectional view showing the internal structure of the sensing module shown in FIG. 5.

Referring to FIGS. 6 to 8, the sensor case 120 may include a case body 121. The case body 121 forms most of the framework and exterior of the sensor case 120, and can house at least a portion of the sensor 110 internally. This case body 121 can be connected to the sensor 110 such that vibrations can be transmitted to the sensor 110 via the case body 121.

In addition, the sensor case 120 may include a horizontal surface portion 121a. The horizontal surface portion 121a can be disposed to block the space between the sensor 110 and the top plate 20. This horizontal surface portion 121a can form the upper surface of the case body 121.

As one example, the horizontal surface portion 121a can form a plane parallel to the top plate 20 or a plane parallel to the circuit board on which the sensor 110 is mounted. For example, the lower surface of the horizontal surface portion 121a can form a horizontal plane parallel to the circuit board on which the sensor 110, more specifically, the elements that make up the sensor 110 are mounted.

In addition, the sensor case 120 may include a vertical surface portion 121b. The vertical surface portion 121b can form a vertical plane that surrounds the horizontal surface portion 121a on the horizontal outer side. This vertical surface portion 121b can form the front surface, rear surface, and both side surfaces of the case body 121.

As one example, the vertical surface portion 121b can be formed in a shape that protrudes downward from the horizontal surface portion 121a. The sensor 110 can be housed within the space enclosed by the horizontal surface portion 121a and the vertical surface portion 121b.

The sensor 110 can be connected to the sensor case 120 below the horizontal surface portion 121a. According to the present embodiment, the sensor case 120 may include a fastening structure protruding from the horizontal surface portion 121a.

As one example, the fastening structure may include a catch protrusion 121c and a hook protrusion 121d protruding downward from the horizontal surface portion 121a. For example, the catch protrusion 121c and the hook protrusion 121d can be disposed spaced apart from each other in the front-rear direction or the lateral direction with the sensor 110 in between, and the sensor 110 can be detachably coupled to the sensor case 120 via coupling with these protrusions.

That is, the sensor 110 can be connected to the sensor case 120 by being coupled to the lower side of the horizontal surface portion 121a so that vibrations can be transmitted to the sensor 110 via the sensor case 120.

In addition, the sensor case 120 may further include contact protrusions 123. The contact protrusions 123 can protrude from the case body 121 toward the top plate 20. These contact protrusions 123 can be formed in a shape that protrudes upward from the upper surface of the case body 121, for example, from the horizontal surface portion 121a.

Vibrations generated in the top plate 20 can be transmitted to the case body 121 via the contact protrusions 123 in contact with the top plate 20. The vibrations transmitted to the case body 121 in this way are then transmitted to the sensor 110, so that whether the vibrations are caused by knocks can be identified by the sensor 110.

According to the present embodiment, the sensor case 120 may include a plurality of contact protrusions 123, and the plurality of contact protrusions 123 can be disposed to be spaced apart on the upper surface of the sensor case 120. As one example, the contact protrusions 123 can be disposed in a form where one contact protrusion 123 is disposed at each vertex of a rectangle, respectively.

The sensor case 120 including the contact protrusions 123 disposed at a plurality of points in this way can make close contact with the top plate 20 at a plurality of points. Accordingly, even if the flatness of the sensor case 120 formed by an injection-molded part is not excellent, for example, even if the upper surface of the sensor case 120 formed by the horizontal surface portion 121a is formed unevenly, the contact between the sensor case 120 and the top plate 20 can be reliably made at a plurality of points.

That is, the sensor case 120 of the present embodiment, which includes the plurality of contact protrusions 123 disposed at a plurality of points, can effectively contribute to ensuring that vibrations generated in the top plate 20 can be transmitted well to the sensor 110 via the sensor case 120 by allowing the contact between the sensor case 120 and the top plate 20 to be made reliably.

In addition, the contact protrusions 123 can be disposed between the top plate 20 and the horizontal surface portion 121a. By protruding from the horizontal surface portion 121a toward the top plate 20, these contact protrusions 123 can space at least a portion of the horizontal surface portion 121a from the top plate 20 and can be in contact with the top plate 20. For example, most of the regions of the sensor case 120, excluding the contact protrusions 123, can be spaced apart from the top plate 20 by a distance corresponding to the vertical length of the contact protrusions 123.

That is, the contact protrusions 123 can limit the regions of the sensor case 120 that contact the top plate 20 to the contact protrusions 123, and allow most of the regions of the sensor case 120 to be spaced apart from the top plate 20 by a predetermined distance. The sensor case 120 of the present embodiment including these contact protrusions 123 can effectively protect the sensor 110 from the effects of heat transmitted from the top plate 20 by suppressing heat conduction from the top plate 20 to the sensor case 120 to the minimum.

### [Supporter]

According to the present embodiment, the supporter 130 may include a supporter body 131. The supporter body 131 forms most of the framework and exterior of the supporter 130 and can be installed in the cooktop case 10.

The supporter body 131 may include a horizontal support portion 131a. The horizontal support portion 131a is housed inside the cooktop case 10 and can be disposed between the bottom portion 11 and the sensor case 120. This horizontal support portion 131a can be disposed to be spaced apart by a predetermined distance upward from the bottom portion 11 of the cooktop case 10.

In addition, the supporter body 131 may include a vertical support portion 131b. The vertical support portion 131b can be disposed between the bottom portion 11 and the horizontal support portion 131a. This vertical support portion 131b can be coupled to the bottom portion 11 and fixed to the cooktop case 10, and can support the horizontal support portion 131a from below.

As one example, a pair of vertical support portions 131b can be disposed on both sides in the front-rear direction or lateral direction of the horizontal support portion 131a. By means of these vertical support portions 131b, the horizontal support portion 131a can be stably coupled to the cooktop case 10 in a state of being spaced apart by a predetermined distance from the bottom portion 11.

According to the present embodiment, the sensor case 120 can be coupled to the supporter 130 so as to be movable in a direction closer to or further away from the top plate 20. To this end, the supporter 130 may include support rods 133 and 134. The support rods 133 and 134 can protrude from the supporter body 131.

In correspondence thereto, the sensor case 120 may further include lifting support portions 125 and 126. The lifting support portions 125 and 126 can be movably coupled to the support rods 133 and 134. That is, the lifting support portions 125 and 126 can movably couple the sensor case 120 to the supporter 130.

As one example, the support rods 133 and 134 may be formed in a columnar shape protruding upward from the horizontal support portion 131a, and the lifting support portions 125 and 126 can be coupled to these support rods 133 and 134 to be raisable and lowerable, thereby supporting the case body 121 on the supporter 130 to be raisable and lowerable.

As one example, fitting holes may be formed in the lifting support portions 125 and 126 to pass therethrough in the up-down direction, and the support rods 133 and 134 can be fitted into the lifting support portions 125 and 126 through these fitting holes. The support rods 133 and 134 are fitted into the lifting support portions 125 and 126 in this way, and can allow the lifting support portions 125 and 126 to be lifted and lowered and constrain the horizontal movement of the lifting support portions 125 and 126.

The lifting support portions 125 and 126 can be movably coupled to the supporter 130 on the horizontal outer side of the sensor 110. For example, both the lifting support portions 125 and 126 and the support rods 133 and 134 can be disposed on the horizontal outer side of the sensor 110, and the lifting support portions 125 and 126 can be movably coupled to the support rods 133 and 134 on the horizontal outer side of the sensor 110.

The lifting support portions 125 and 126 may include a first lifting support portion 125. The present embodiment exemplifies that the shape of the case body 121 as viewed from above is a rectangle. As one example, the shape of the case body 121 as viewed from above may be a rectangle where the length in the lateral direction is greater than the length in the front-rear direction, as shown in FIG. 7.

In addition, the plurality of lifting support portions 125 and 126 can be disposed symmetrically in the front-rear direction or lateral direction, or symmetrically in both the front-rear direction and the lateral direction, around the sensor 110. In correspondence thereto, the plurality of support rods 133 and 134 can also be disposed symmetrically in the front-rear direction or lateral direction, or symmetrically in both the front-rear direction and the lateral direction, around the sensor 110.

As one example, a pair of first lifting support portions 125 can be disposed to be spaced apart in the lateral direction. For example, the first lifting support portions 125 can be disposed on the lateral outer side of the sensor 110, wherein the first lifting support portion 125 can be disposed on the left side of the sensor 110, and the first lifting support portion 125 can also be disposed on the right side of the sensor 110.

In correspondence thereto, the support rods 133 and 134 may include first support rods 133. At least one pair of first support rods 133 can be disposed to be spaced apart in the lateral direction in the supporter 130. For example, the at least one pair of first support rods 133 can be disposed on the lateral outer side of the sensor 110, wherein at least one first support rod 133 can be disposed on the left side of the sensor 110, and at least one first support rod 133 can be disposed on the right side of the sensor 110.

In this case, the plurality of first lifting support portions 125 and the plurality of first support rods 133 can be disposed symmetrically in the lateral direction around the sensor 110, respectively. Accordingly, the disposition of the points where the first lifting support portions 125 and the first support rods 133s are coupled can also be symmetrical in the lateral direction around the sensor 110.

The present embodiment exemplifies that each pair of first support rods 133 is disposed respectively on the left and right sides of the sensor 110. As one example, a pair of first support rods 133 can be arranged in the front-rear direction on the left side of the sensor 110, and a pair of first support rods 133 can be arranged in the front-rear direction on the right side of the sensor 110 as well. For example, the first support rods 133 can be disposed in a form where one first support rod 133 is disposed respectively at each vertex of a rectangle.

In this case, the first support rods 133 disposed on the left side of the sensor 110 can be respectively fitted into the first lifting support portions 125 disposed on the left side of the sensor 110, and the first support rods 133 disposed on the right side of the sensor 110 can be respectively fitted into the first lifting support portions 125 disposed on the right side of the sensor 110.

In addition, the lifting support portions 125 and 126 may further include second lifting support portions 126. The present embodiment exemplifies that a pair of second lifting support portions 126 is disposed on the outer side in the front-rear direction of the sensor 110.

As one example, the pair of second lifting support portions 126 can be disposed to be spaced apart in the front-rear direction with the sensor 110 in between. And these can be disposed between the pair of first lifting support portions 125 disposed to be spaced apart in the lateral direction. Preferably, the second lifting support portions 126 can be disposed at a position that bisects the distance between the pair of first lifting support portions 125.

In correspondence thereto, the support rods 133 and 134 may further include second support rods 134. The present embodiment exemplifies that a pair of second support rods 134 is disposed on the outer side in the front-rear direction of the sensor 110.

As one example, the pair of second support rods 134 can be disposed to be spaced apart in the front-rear direction with the sensor 110 in between. And these can be disposed between the pair of first support rods 133 disposed to be spaced apart in the lateral direction.

And these can be disposed between the first support rod 133 disposed on the left side of the sensor 110 and the first support rod 133 disposed on the right side of the sensor 110. Preferably, the support rods 134 disposed on the outer side in the front-rear direction of the sensor 110 can be disposed at a position that bisects the distance between the first support rod 133 disposed on the left side of the sensor 110 and the first support rod 133 disposed on the right side of the sensor 110.

In this case, the second support rod 134 disposed on the front side of the sensor 110 can be fitted into the second lifting support portion 126 disposed on the front side of the sensor 110, and the second support rod 134 disposed on the rear side of the sensor 110 can be fitted into the second lifting support portion 126 disposed on the rear side of the sensor 110, respectively.

In this case, the plurality of second lifting support portions 126 and the plurality of second support rods 134 can be disposed symmetrically in the front-rear direction around the sensor 110, respectively. Accordingly, the disposition of the points where the second lifting support portions 126 and the second support rods 134 are coupled can also be symmetrical in the front-rear direction around the sensor 110.

As a result, the plurality of lifting support portions 125 and 126 and the plurality of support rods 133 and 134 can be disposed symmetrically in the front-rear direction and the lateral direction around the sensor 110, respectively. Accordingly, the disposition of the points where the lifting support portions 125 and 126 and the support rods 133 and 134 are coupled can also be symmetrical in the front-rear direction or lateral direction around the sensor 110.

In addition, the first lifting support portions 125 and the first support rods 133 can be coupled at at least four or more points, and the second lifting support portions 126 and the second support rods 134 can be coupled at at least two or more points. That is, the lifting support portions 125 and 126 and the support rods 133 and 134 can be coupled at at least six or more points.

Accordingly, the sensor case 120 can be supported by the supporter 130 at a plurality of points of at least six or more points, and at a plurality of points disposed symmetrically in the front-rear direction or lateral direction. Thus, the sensor case 120 can be raised and lowered in a state of being very stably supported by the supporter 130, ensuring that the posture of the sensor case 120 can remain stable, as well as sufficiently providing conditions for the sensor case 120 to be effectively in close contact with the top plate 20.

In addition, the supporter 130 may further include support walls 135. The support walls 135 can protrude upward from the supporter body 131. The present embodiment exemplifies that the support walls 135 protrude upward from the horizontal support portion 131a.

As one example, the supporter 130 may include a pair of support walls 135. This pair of support walls 135 can be disposed to be spaced apart in the lateral direction with the sensor case 120 in between.

In correspondence thereto, the sensor case 120 may include a pair of sliding hooks 127. The pair of sliding hooks 127 can be disposed to be spaced apart in the lateral direction with the case body 121 in between.

Each sliding hook 127 is provided to be couplable to its adjacent support wall 135, respectively. The sliding hooks 127 thus provided can be movably coupled to the support walls 135, thereby allowing the sensor case 120 to be movably coupled to the support walls 135.

A hook slot 136 can be formed in the support wall 135. As one example, the hook slot 136 can be formed in the support wall 135 to pass therethrough in the lateral direction, and can be formed in a shape where the length in the up-down direction is greater than the length in the front-rear direction. This hook slot 136 can form a passage, which is necessary for the movement of the sliding hook 127 coupled to the support wall 135, in the support wall 135.

The sliding hook 127 can be disposed to face the support wall 135 in the lateral direction. This sliding hook 127 can be coupled to the support wall 135 so as to be slidable in the up-down direction along the support wall 135.

The sliding hook 127 may be provided with a projecting portion 127a. The projecting portion 127a is a portion of the sliding hook 127 that projects laterally, and as this projecting portion 127a is inserted into the hook slot 136, the sliding hook 127 can be coupled to the support wall 135 so as to be raisable and lowerable. By means of this coupling between the sliding hook 127 and the support wall 135, both side portions of the sensor case 120 can be coupled to the support wall 135 to be raisable and lowerable.

The projecting portion 127a can be connected to the case body 121 via a connecting portion 127b. The connecting portion 127b can be formed in a shape that protrudes downward from the vertical surface portion 121b of the case body 121. The projecting portion 127a can be disposed below the case body 121, and can be connected to the case body 121 via the connecting portion 127b. The projecting portion 127a can project laterally from the lower end of the connecting portion 127b.

The connecting portion 127b can be provided to be elastically deformable in the lateral direction, and the position of the projecting portion 127a can change depending on the deformed state of the connecting portion 127b. Accordingly, the projecting portion 127a can be inserted into the hook slot 136 from outside the support wall 135, or can be disengaged from the hook slot 136 and separated from the support wall 135.

The upper end of the projecting portion 127a can form a horizontal plane that protrudes laterally from the connecting portion. And the projecting portion 127a can be formed in a shape where the degree of projection decreases towards the bottom. Accordingly, the outer surface of the projecting portion 127a can form an inclined surface.

In addition, the upper end of the hook slot 136 can be disposed to be spaced apart by a predetermined distance from the upper end of the support wall 135 in the up-down direction. That is, the hook slot 136 is formed only on the inner side in the up-down direction of the support wall 135, and the upper end of the hook slot 136 is not open to the upper side of the support wall 135. The support walls 135 with these hook slots 136 formed therein can limit the movement range in the up-down direction of the sliding hook 127.

For example, when the projecting portion 127a, which has been moving upward, gets caught on the upper end of the hook slot 136 inside the hook slot 136, in other words, on the inner upper surface of the support wall 135, the upward movement of the sliding hook 127 can be restricted. This type of coupling structure between the support wall 135 and the sliding hook 127 can contribute to stably maintaining the coupled state between the sensor case 120 and the supporter 130 while allowing the sensor case 120 to be raised and lowered within a limited range.

### [Structure for Elastically Supporting the Sensor Case]

As described above, the sensing module 100 of the present embodiment may include the elastic member 140. The elastic member 140 is supported by the supporter 130 and can elastically support the sensor case 120. By this action of the elastic member 140, at least a portion of the sensor case 120 can be brought into close contact with the top plate 20 between the supporter 130 and the top plate 20.

According to the present embodiment, the sensing module 100 may include a plurality of elastic members 140, and each elastic member 140 can be installed, respectively, on the support rods 133 and 134. For example, the sensing module 100 can be provided with the elastic members 140, the number of which corresponds to the number of support rods 133 and 134, and one elastic member 140 can be installed on each of the support rods 133 and 134.

As one example, each elastic member 140 may include a coil spring provided to be stretchable and compressible in the up-down direction. The coil springs can be coupled to the support rods 133 and 134. A hollow that passes through the coil spring in the up-down direction is formed in the coil spring, and the support rods 133 and 134 can be fitted into the coil springs through these hollows.

The support rods 133 and 134 can be fitted into the coil springs, allowing stretch and compression in the up-down direction of the coil spring while constraining the horizontal movement of the coil spring. That is, the horizontal movement of the elastic members 140 is constrained by the support rods 133 and 134, but the stretch and compression in the up-down direction of the elastic members 140 can occur smoothly without being hindered by the support rods 133 and 134.

The lower portions of the coil springs can be supported by the supporter 130. As one example, the lower ends of the coil springs can be supported by support ribs 131c that protrude centrifugally from the outer circumferential surfaces of the support rods 133 and 134. The support ribs 131c protrude from the outer circumferential surfaces of the support rods 133 and 134 and the upper surface of the horizontal support portion 131a, and can reinforce the coupling between the support rods 133 and 134 and the supporter body 131 and support the coil spring from below. As another example, the lower ends of the coil springs can be supported by the upper surface of the supporter body 131.

In addition, the coil springs can support the lifting support portions 125 and 126 upward. For example, the coil springs can support the lifting support portions 125 and 126 upward in a state where the upper ends of the coil springs are in contact with the lower surface of the lifting support portions 125 and 126, or the coil springs can support the lifting support portions 125 and 126 in a state where the upper portions of the coil springs are coupled to the lifting support portions 125 and 126.

As described above, in the present embodiment, the plurality of support rods 133 and 134 can be disposed symmetrically in the front-rear direction or lateral direction, or symmetrically in both the front-rear direction and the lateral direction, around the sensor 110, and one elastic member 140 can be installed on each of the support rods 133 and 134. Accordingly, the plurality of elastic members 140 can be disposed symmetrically in the front-rear direction or lateral direction, or symmetrically in both the front-rear direction and the lateral direction, around the sensor 110.

Accordingly, the sensor case 120 can be elastically supported by the elastic members 140 at a plurality of points of at least six or more points, and at a plurality of points disposed symmetrically in the front-rear direction or lateral direction. Thereby, the sensor case 120 can maintain a balanced posture and can be effectively brought into close contact with the top plate 20.

In addition, the disposition positions of the contact protrusions 123 can be set as a result of considering the disposition structure of the elastic members 140 as described above. As one example, each contact protrusion 123 can be disposed between two adjacent elastic members 140 (hereinafter referred to as "two closest elastic members").

For example, the contact protrusions 123 can be disposed, respectively, between the elastic member 140 disposed on the left side of the sensor 110 and the elastic member 140 disposed on the front side of the sensor 110, between the elastic member 140 disposed on the right side of the sensor 110 and the elastic member 140 disposed on the front side of the sensor 110, between the elastic member 140 disposed on the left side of the sensor 110 and the elastic member 140 disposed on the rear side of the sensor 110, and between the elastic member 140 disposed on the right side of the sensor 110 and the elastic member 140 disposed on the rear side of the sensor 110.

Each contact protrusion 123 is thus disposed between two closest elastic members 140, and can be disposed between them with respect to both the lateral direction and the front-rear direction. Preferably, each contact protrusion 123 can be disposed at a position that bisects, in the lateral direction as well as in the front-rear direction, the distance between the two closest elastic members 140.

Accordingly, since the pressing force from the elastic members 140 can be uniformly applied to the plurality of contact protrusions 123 provided on the sensor case 120, the sensor case 120 can be supported in a balanced manner by the elastic members 140, and the contact protrusions 123 can be effectively brought into close contact with the top plate 20.

### [Disposition Structure of Sensing Module]

As one example, a plurality of heating units 30 can be provided inside the cooktop case 10, i.e., in the receiving space, as shown in FIGS. 1 to 4. According to the present embodiment, a first heating unit 31, a second heating unit 33, and a third heating unit 35 can be disposed in the receiving space.

According to the present embodiment, the first heating unit 31 and the second heating unit 33 can be disposed at a position offset further forward than the third heating unit 35. That is, with respect to the front-rear direction, the first heating unit 31 and the second heating unit 33 can be disposed between the control panel 40 and the third heating unit 35.

In addition, the first heating unit 31 and the second heating unit 33 can be disposed to be spaced apart by a predetermined distance in the lateral direction. For example, when the receiving space is halved into a left region and a right region, the first heating unit 31 can be disposed in the right region, while the second heating unit 33 and the third heating unit 35 can be disposed in the left region.

According to this, the first heating unit 31 and the second heating unit 33 are disposed to be spaced apart by a predetermined distance in the lateral direction, and the first heating unit 31 and the third heating unit 35 are disposed to be spaced apart by a predetermined distance in the lateral direction. And the second heating unit 33 and the third heating unit 35, which are disposed in the left region, can be arranged along the front-rear direction.

In addition, various electrical components can be disposed in the receiving space. For example, the control panel 40, power processing unit, coil control unit, etc., can be disposed in the receiving space, and of these, the control panel 40 can be disposed at the very front.

At least one of the above electrical components can be disposed between a pair of heating units disposed to be spaced apart by a predetermined distance in the lateral direction. As one example, at least one of the above electrical components can be disposed between the first heating unit 31 and the second heating unit 33. Hereinafter, the electrical component disposed between the first heating unit 31 and the second heating unit 33 will be referred to as the "first electrical component."

As another example, one or a plurality of heating units may be provided in a form where each includes a plurality of heating coils. In this case, the electrical component, particularly the first electrical component, can be disposed between a plurality of heating coils arranged in the horizontal direction. For example, the first electrical component may be disposed between a pair of heating coils disposed to be spaced apart by a predetermined distance in the front-rear direction, or may be disposed between a pair of heating coils disposed to be spaced apart by a predetermined distance in the lateral direction.

The present embodiment exemplifies a form where the first electrical component is disposed between the first heating unit 31 and the second heating unit 33.

According to the present embodiment, the control panel 40, power processing unit, coil control unit, etc., may each include circuit boards. At least one of these circuit boards can be electrically connected to at least one of the first heating unit 31, the second heating unit 33, and the third heating unit 35. At least one of these circuit boards can be disposed between the first heating unit 31 and the second heating unit 33.

As one example, at least one of the switching mode power supply, noise filters 63 and 34, and inverter PCBs 65 and 66 may be disposed between the first heating unit 31 and the second heating unit 33. The present embodiment exemplifies that the noise filter 63 is disposed between the first heating unit 31 and the second heating unit 33. That is, the present embodiment exemplifies that the first electrical component is the noise filter 63. However, the present disclosure is not limited thereto, and the objects for the first electrical component can be varied depending on the results of the electrical component disposition design.

In addition, according to the present embodiment, the control panel 40 and the main PCB 61 installed thereon can be disposed to be offset further forward than the heating units disposed on both sides of the first electrical component 63. For example, the control panel 40 and the main PCB 61 can be disposed in front of the first heating unit 31 and the second heating unit 33, and the first electrical component 63.

The sensing module 100 can also be disposed in the same space as the space where the heating units 30 and other electrical components are disposed, i.e., in the receiving space inside the cooktop case 10. This sensing module 100 can be disposed in the space formed between a pair of heating units spaced apart in the lateral direction, for example, the first heating unit 31 and the second heating unit 33. That is, with respect to the lateral direction, the sensing module 100 can be disposed between the first heating unit 31 and the second heating unit 33.

As one example, the sensing module 100 can be disposed in the space surrounded by a pair of heating units and the first electrical component 63. For example, the sensing module 100 can be disposed in the space surrounded by the first heating unit 31 on the left, the first electrical component 63 at the rear, and the second heating unit 33 on the right.

In addition, the sensing module 100 can be disposed behind the control panel 40. According to this, the sensing module 100 can be disposed in the space surrounded by a pair of heating units and the control panel 40. For example, the sensing module 100 can be disposed in the space surrounded by the first heating unit 31 on the left, the control panel 40 at the front, and the second heating unit 33 on the right.

In addition, the sensing module 100 can be disposed in the space surrounded by a pair of heating units, the first electrical component 63, and the control panel 40. For example, the sensing module 100 can be disposed in the space surrounded by the first heating unit 31 on the left, the first electrical component 63 at the rear, the second heating unit 33 on the right, and the control panel 40 at the front. That is, the sensing module 100 can be disposed between the first heating unit 31 and the second heating unit 33 with respect to the lateral direction, and between the control panel 40 and the first electrical component 63 with respect to the front-rear direction.

Looking into the state of the receiving space, the right region of the receiving space is mostly filled by the first heating unit 31 and the inverter PCB 65 and noise filter 64 connected thereto, the control panel 40, etc. A greater number of heating units are disposed in the left region of the receiving space than in the right region. That is, the left region of the receiving space is mostly filled by the second heating unit 33 and the third heating unit 35, and the inverter PCB 66 connected thereto.

As described above, the first heating unit 31 and the second heating unit 33 are disposed to be spaced apart by a predetermined distance in the lateral direction, and the first heating unit 31 and the third heating unit 35 are disposed to be spaced apart by a predetermined distance in the lateral direction. This is a disposition for avoiding the occurrence of interference between two cooking vessels placed on top when the first heating unit 31 and the second heating unit 33 operate simultaneously, or when the first heating unit 31 and the third heating unit 35 operate simultaneously.

Accordingly, the central region, which is the region between the left and right regions, has more spatial leeway compared to the left and right regions. That is, a predetermined free space is formed between the first heating unit 31 and the second heating unit 33 and between the first heating unit 31 and the third heating unit 35, and the first electrical component 63 can be disposed in this free space.

As one example, the first electrical component 63 may be an electrical component that is electrically connected to at least one of the first heating unit 31, the second heating unit 33, and the third heating unit 35. For example, the first electrical component 63 may be the noise filter 63 that is electrically connected to the second heating unit 33 and the third heating unit 35.

According to this, the free space formed as a result of attempting to secure the distance between the first heating unit 31 and the second heating unit 33, and the free space formed as a result of attempting to secure the distance between the first heating unit 31 and the third heating unit 35, are used as the space needed for disposing the first electrical component 63. That is, the first electrical component 63 is disposed in the free space formed as a result of securing the distance between the first heating unit 31 and the second heating unit 33 and the distance between the first heating unit 31 and the third heating unit 35.

And as the first electrical component 63 is disposed in the free space in this way, the first electrical component 63 can be disposed in a position very close to all of the first heating unit 31, the second heating unit 33, and the third heating unit 35. When the disposition of the first electrical component 63 is achieved in this way, the wiring connection structure between the heating units 30 and the first electrical component 63 can be simplified, and the wiring length can also be shortened.

The sensing module 100 can be disposed in the free space. For example, the first electrical component 63 and the sensing module 100 can be disposed in the space formed between the first heating unit 31 and the second heating unit 33, which are spaced apart in the lateral direction.

If the cooking appliance includes a single heating unit, i.e., if the cooking appliance includes only the first heating unit 31, the first electrical component 63 and the sensing module 100 can be disposed in the space formed between the side wall portion 13 of the cooktop case 10 and the first heating unit 31.

For example, the first electrical component 63 and the sensing module 100 may be disposed between one of the left and right side surfaces of the cooktop case 10 and the first heating unit 31, or the first electrical component 63 may be disposed on one of the left and right side surfaces of the cooktop case 10, and the sensing module 100 may be disposed on the other of the left and right side surfaces of the cooktop case 10.

The present embodiment exemplifies a form where the heating units 30 include the first heating unit 31, the second heating unit 33, and the third heating unit 35, and the first electrical component and the sensing module 100 are disposed between the first heating unit 31 and the second heating unit 33.

As one example, the sensing module 100 can be disposed in the space surrounded by the first heating unit 31, the first electrical component 63, and the second heating unit 33. That is, the sensing module 100 can be disposed in the free space, but can be disposed in front of the first electrical component 63.

As one example, when the receiving space is halved into a front region and a rear region, the first electrical component 63 can be disposed in a position that spans both the front and rear regions, for example, approximately at the center in the front-rear direction of the receiving space. And the sensing module 100 can be disposed in the front region. This is the result of taking into account the fact that most knock inputs occur in the region that is offset toward the front of the cooking appliance.

Typically, when a user taps the top plate 20 for a knock input, s/he will tap the region located further forward than the cooking vessel placed on the top plate 20. This is much more natural than extending the arm further back than the cooking vessel and tapping the top plate 20.

In view of this point, it can be said that disposing the sensing module 100 in the front region is far more advantageous than disposing it in the rear region. As the sensing module 100 is disposed in the front region, the distance between the knock input point and the sensing module 100 can get shortened, and as a result, the detection accuracy of the sensor 110 for knock vibrations can be further improved.

In addition, when the sensing module 100 is disposed in the front region, the distance between the knock input point and the sensing module 100 gets shorter than the distance between the cooking vessel and the sensing module 100, as well as the likelihood that vibrations generated in the top plate 20 by knock inputs are transmitted directly to the sensing module 100 without passing through the disposition points of the cooking vessels gets higher.

That is, when the sensing module 100 is disposed in the front region, the distance between the knock input point and the knock detection point gets shorter than the distance between the vibration generation point caused by the cooking vessel and the knock detection point, as well as the likelihood that vibrations generated in the top plate 20 by knock inputs are transmitted directly to the sensing module 100 without passing through the disposition points of the cooking vessels gets higher.

When the food contained in the cooking vessel placed on the top plate 20 boils, the vibrations generated in the cooking vessel due to this are transmitted to the top plate 20, which can act as a factor that reduces the accuracy of knock vibration detection by the sensor 110.

Taking this point into account, the sensing module 100 is disposed in the front region in the present embodiment. Accordingly, the distance between the knock input point and the knock detection point can be made significantly shorter than the distance between the vibration generation point caused by the cooking vessel and the knock detection point. Further, the risk that the vibration pattern caused by the knock input could be distorted by the vibrations caused by the cooking vessel can be significantly reduced.

That is, by having the sensing module 100 disposed in the front region, the cooking appliance of the present embodiment can effectively improve the accuracy of the knock detection operation of the sensor 110.

The control panel 40 adjacent to the sensing module 100 can be provided with various circuits and switches for adjusting the operation of the cooking appliance, a display for showing the operating states of the cooking appliance, etc. To ensure their smooth operation, the control panel 40 and its surrounding regions are managed at a relatively lower temperature compared to other regions.

According to the present embodiment, the sensing module 100 is disposed in the front region, but is disposed in a region very close to the control panel 40. By having the sensing module 100 disposed in a region adjacent to the control panel 40 in this way, which maintains a lower temperature than other regions, the risk of malfunction or damage to the sensor 110 due to thermal effects can be significantly reduced.

The cooking appliance of the present embodiment as described above can effectively reduce the risk of the occurrence of malfunction and damage to the sensor 110 while providing a high level of knock detection performance by having the sensor 110 disposed in a region that is close to the typical knock input point and that is also maintained at a low temperature.

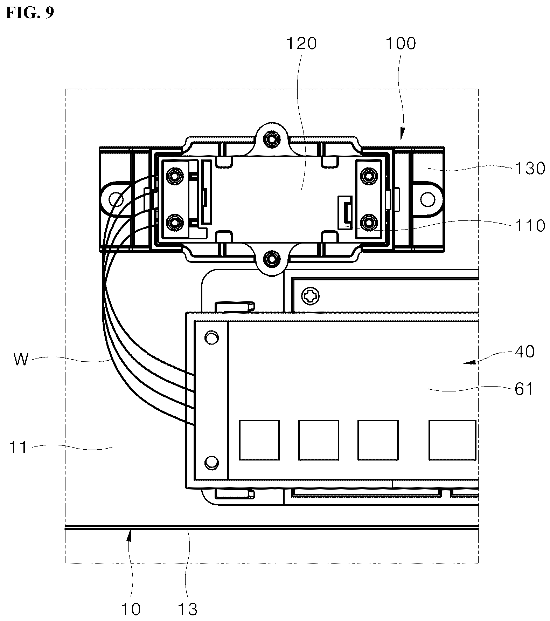

Furthermore, the sensor 110 can be electrically connected to the control panel 40, more specifically to the main PCB 61, via a wire w (see FIG. 9). As the sensing module 100 is disposed in a region very close to the control panel 40 as described above, the wiring connection structure between the sensor 110 and the main PCB 61 can be simplified, and the wiring length can also be effectively shortened.

The sensing module 100 provided as described above can be used to enable the operation of the cooking appliance to be controlled with only knock inputs, i.e., with only the user tapping the top plate 20. That is, the cooking appliance with the sensing module 100 of the present embodiment can provide a function that allows the operation of the cooking appliance to be controlled with only a knocking action.

According to the present embodiment, various operations of the cooking appliance can be adjusted depending on the kind of knock input type. As one example, the corresponding operation control may vary depending on the number of times the user taps the top plate 20. For example, if the user taps the top plate 20 once, the heat level of the operating heating unit 30 can increase; if the user taps the top plate 20 twice, the heat level of the operating heating unit 30 can increase; and if the user taps the top plate 20 three times, the operation of the heating unit 30 can be stopped.

As described above, the cooking appliance of the present embodiment can provide an operation control function via knock inputs, and this function can be used not only for the purpose of adjusting the heat level of the heating unit 30 but also for the purpose of controlling various other functions. For example, the operation control function via knock inputs provided by the cooking appliance of the present embodiment can be used for purposes of turning the heating unit 30 on/off, selecting the heating unit 30 to be operated, adjusting the timer, etc.

### [Second Example of Sensing Module]

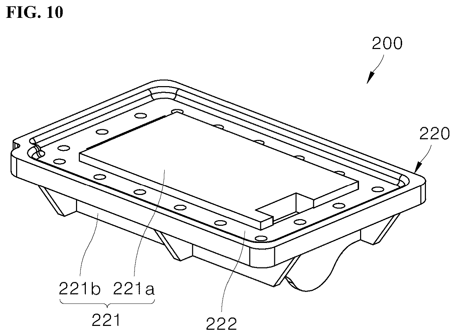

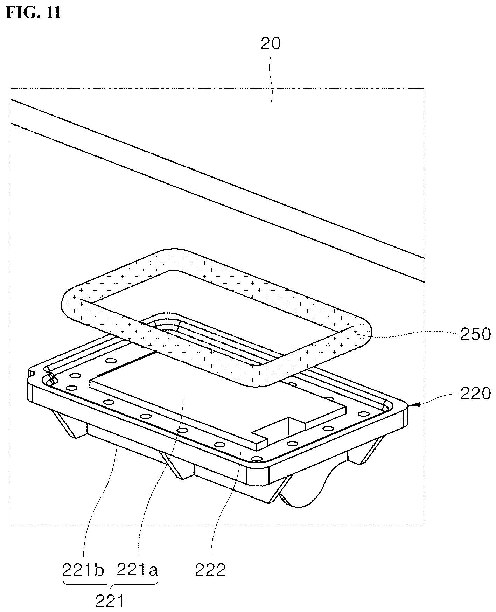

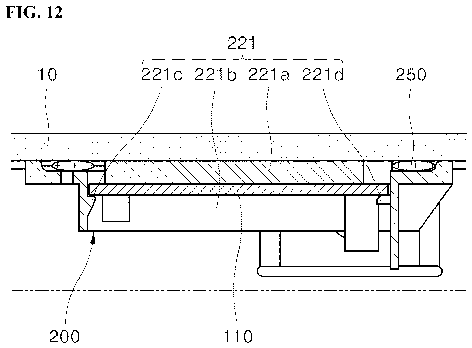

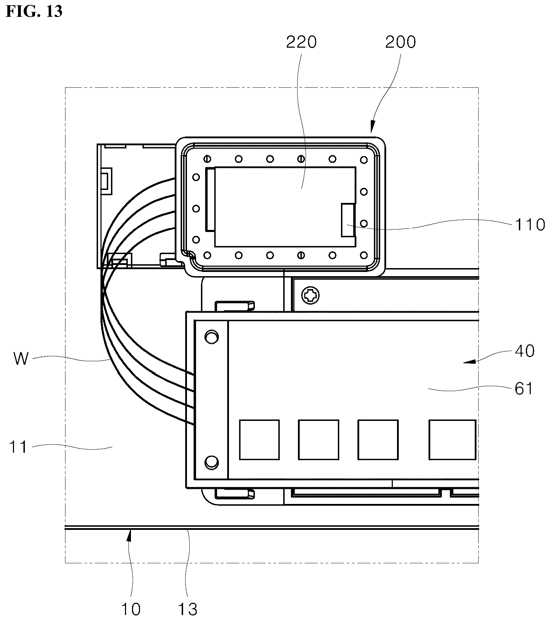

FIG. 10 is an enlarged view enlarging and showing a sensing module according to a second embodiment of the present disclosure, and FIG. 11 is an exploded perspective view showing a disassembled state of the sensing module shown in FIG. 10. Further, FIG. 12 is a front cross-sectional view showing the internal structure of the sensing module shown in FIG. 10, and FIG. 13 is a view schematically showing the connection state between the sensor and the control panel shown in FIG. 10.

Referring to FIGS. 10 to 13, the sensing module 200 according to the second embodiment of the present disclosure is provided in a form that is directly installed on the top plate 20. That is, unlike the sensing module exemplified in the previous embodiment, the sensing module 200 of the present embodiment is not installed on the cooktop case 10 via a supporter, but can be directly fixed to the top plate 20.

As one example, the sensing module 200 of the present embodiment has a sensor 110 and a sensor case 220, but does not have a supporter. The sensor case 220 can be formed in a roughly hexahedral shape, similar to the sensor case exemplified in the previous embodiment. This sensor case 220 may include a case body 221 including a horizontal surface portion 221a and a vertical surface portion 221b.

The horizontal surface portion 221a can form a plane parallel to the top plate 20 and a plane parallel to a circuit board on which the sensor 110 is mounted. For example, the upper surface of the horizontal surface portion 221a can form a horizontal plane parallel to the lower surface of the top plate 20, and the lower surface of the horizontal surface portion 221a can form a horizontal plane parallel to the circuit board of the sensor 110.

The vertical surface portion 221b can be formed in a shape that protrudes downward from the horizontal surface portion 221a. The sensor 110 can be housed within the space enclosed by the horizontal surface portion 221a and the vertical surface portion 221b.

As described above, the sensing module 200 of the present embodiment is provided in a form that is directly installed on the top plate 20, and for this purpose, the sensing module 200 of the present embodiment may further include an attachment material 250. The attachment material 250 can bring at least a portion of the horizontal surface portion 221a into close contact with the top plate 20, and attach the sensor case 220 to the top plate 20.

As one example, the attachment material 250 may be a sealant applied between the upper surface of the sensor case 220 and the lower surface of the top plate 20. For example, a sealant of a silicone material with excellent heat resistance can be applied as the attachment material 250, and the sensor case 220 can be in close contact with and fixed to the top plate 20 firmly below the top plate 20 by the attachment material 250.

The sensor case 220 may be provided with a groove portion 222. The groove portion 222 can be formed in a shape where a portion of the upper surface of the horizontal surface portion 221a is recessed downward. The attachment material 250 can be filled into the space formed between the groove portion 222 and the top plate 20, and attached to the sensor case 220 and the top plate 20.

As one example, the groove portion 222 is disposed on the horizontal inner side of the horizontal surface portion 221a, and can be formed in a shape similar to the shape of the outer perimeter of the horizontal surface portion 221a. For example, the horizontal shape of the horizontal surface portion 221a may be a square shape, and the horizontal shape of the groove portion 222 may be formed in a smaller square ring shape.

The groove portion 222 formed in this way can serve to prevent the attachment material 250 from leaking out to the horizontal outer side of the sensor case 220. Further, the groove portion 222 can serve to enhance the bonding strength between the sensor case 220 and the top plate 20 by allowing the application thickness of the attachment material 250 to be increased by the depth of the groove portion 222.

The sensing module 200 of the present embodiment as described above can effectively improve the accuracy of the knock detection operation of the sensor 110 while reducing the cost required for installing the sensing module 200 as it is provided in a simpler structure compared to the sensing module exemplified in the previous embodiment and is installed on the cooking appliance so as to be firmly in close contact with the top plate 20.

Furthermore, the disposition position of the sensing module 200 of the present embodiment can be set to be the same as or similar to the disposition position of the sensing module 200 exemplified in the previous embodiment. The cooking appliance including this sensing module 200 can effectively reduce the risk of the occurrence of malfunction and damage to the sensor 110 while providing a high level of knock detection performance by having the sensor 110 disposed in a region that is close to the typical knock input point and that is also maintained at a low temperature.

In addition, the sensor 110 of the present embodiment, similar to the sensor exemplified in the previous embodiment, can be electrically connected to the main PCB 61 via a wire w (see FIG. 13). As the sensing module 200 is disposed in a region very close to the control panel 40 as described above, the wiring connection structure between the sensor 110 and the main PCB 61 can be simplified, and the wiring length can also be effectively shortened.

### [Third Example of Sensing Module]

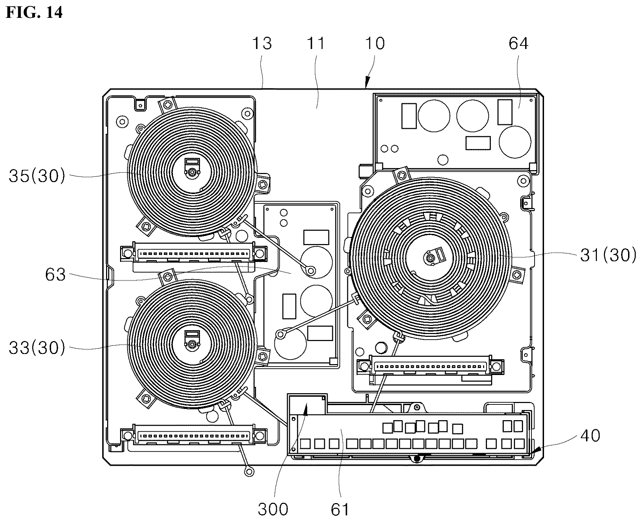

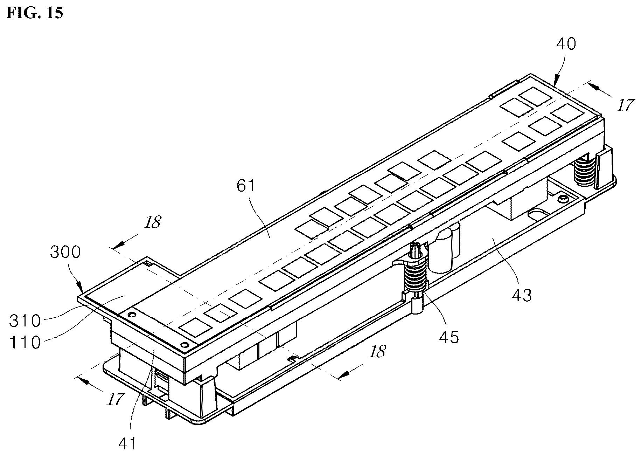

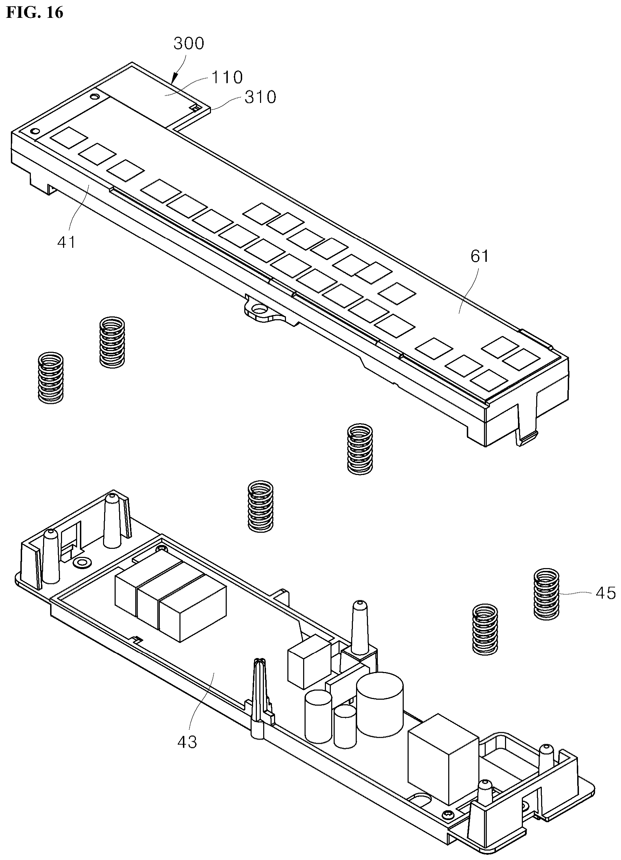

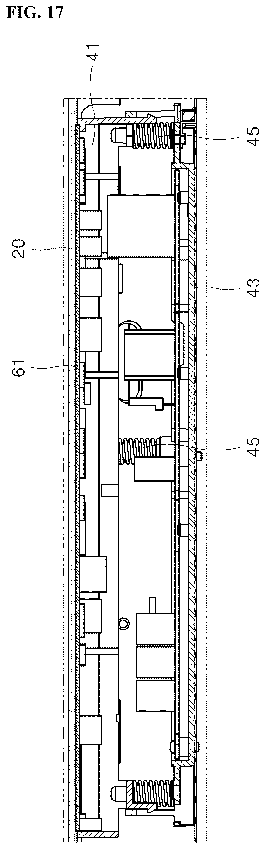

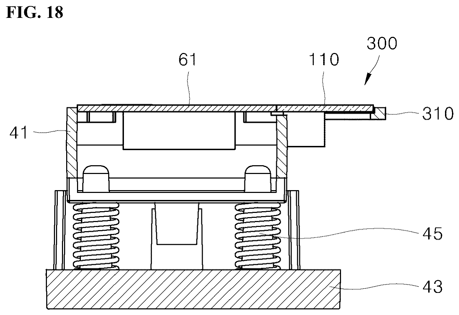

FIG. 14 is a plan view showing the internal structure of a cooking appliance according to a third embodiment of the present disclosure, FIG. 15 is an enlarged view enlarging and showing the control panel and the sensing module shown in FIG. 14, and FIG. 16 is an exploded perspective view showing a disassembled state of the control panel and the sensing module shown in FIG. 15. Further, FIG. 17 is a cross-sectional view along the line "17-17" in FIG. 15, and FIG. 18 is a cross-sectional view along the line "18-18" in FIG. 15.

Referring to FIGS. 14 to 16, the sensing module 300 according to the third embodiment of the present disclosure can be disposed on the control panel 40. That is, in the sensing module 300 of the present embodiment, the sensor 110 can be disposed on the control panel 40. As one example, the sensing module 300 can be formed integrally with the control panel 40.

According to the present embodiment, the control panel 40 may include a circuit board and a panel case 41. As one example, the main PCB 61 can be applied as the circuit board provided in the control panel 40.

In addition, the control panel 40 may be provided with a touchpad. The touchpad can be disposed at the topmost portion of the control panel 40, and may be provided integrally with the main PCB 61 or provided separately from the main PCB 61. The control panel 40 provided with this touchpad can be installed inside the cooktop case 10 so that the touchpad can be in close contact with the top plate 20.

The panel case 41 is provided to be able to house and support the circuit board provided in the control panel 40, i.e., the main PCB 61, a touch panel, etc. The horizontal shape of the panel case 41 can be formed in a shape corresponding to the horizontal shape of the circuit board, for example, in a rectangular shape. As one example, the panel case 41 can be formed in a hexahedral shape with the upper portion open, and the touchpad of the control panel 40 can contact the top plate 20 through the open upper portion of the panel case 41.

The control panel 40 may further include a supporter 43 and elastic members 45. The supporter 43 and the elastic members 45 of the control panel 40 may be provided in a form having a structure and function similar to the supporter 130 (see FIG. 6) and the elastic members 140 (see FIG. 6) exemplified in one embodiment of the present disclosure.

That is, the supporter 43 of the control panel 40 can be installed in the cooktop case 10 and support the panel case 41. For example, the supporter 43 can be coupled to the bottom portion 11 of the cooktop case 10, and the panel case 41 can be supported by the supporter 43 between the supporter 43 and the top plate 20.

And the elastic members 45 can press the panel case 41 toward the top plate 20 so that at least a portion of the touch panel can be in close contact with the top plate 20. For example, the elastic members 45 can elastically press the panel case 41 upward, thereby allowing at least a portion of the touch panel to be in close contact with the top plate 20.

As described above, the sensing module 300 can be disposed on the control panel 40. With respect to the horizontal direction, the sensing module 300 may be disposed at a position very close to the control panel 40, or may be disposed inside the control panel 40.

If the sensing module 300 is disposed at a position very close to the control panel 40, the sensing module 300 can be disposed above or on the side of the control panel 40. As one example, the sensing module 300 can be disposed above the control panel 40, and disposed in a form where it is connected to the control panel 40.

In addition, the sensing module 300 may be provided integrally with the control panel 40, or may be provided in a form where it is provided separately from the control panel 40 and connected thereto. The present embodiment exemplifies a form where the sensing module 300 is provided integrally with the control panel 40.

As one example, the sensor case 310 of the sensing module 300 may be provided separately from the panel case 41 and disposed to be connected to the panel case 41, or may be formed integrally with the panel case 41. The present embodiment exemplifies that the sensor case 310 is formed integrally with the panel case 41.

The sensor case 310 provided as described above can be raised and lowered in conjunction with the raising and lowering of the panel case 41. Accordingly, the sensor 110 housed in the sensor case 310 can also be raised and lowered in conjunction with the raising and lowering of the panel case 41.

According to the present embodiment, the touchpad of the control panel 40 can be elastically supported by the elastic members 45 and brought into close contact with the top plate 20, and the sensor 110 of the sensing module 300 can also be elastically supported by the elastic members 45 and brought into close contact with the top plate 20. That is, the touchpad of the control panel 40 and the sensor 110 of the sensing module 300 share the panel case 41 and the elastic members 45 as structures for elastic support.

Accordingly, the sensing module 300 can be effectively brought into close contact with the top plate 20 only by sharing the structure for the elastic support of the control panel 40 without requiring the addition of separate structures for bringing the sensor 110 into close contact with the top plate 20. This sensing module 300 can provide the effect of reducing the installation cost of the sensing module 300 while keeping the accuracy in the knock detection operation of the sensor 110 at a high level.

In addition, the sensing module 300 of the present embodiment can be disposed at a position very close to the control panel 40 by being provided in a form where it is connected to the control panel 40 or it is provided integrally with the control panel 40. By being disposed at a position very close to the control panel 40, this sensing module 300 can not only enable more effective temperature management of the sensor 110, but also provide the effect of allowing the wiring connection structure between the sensor 110 and the main PCB 61 to be further simplified and configured more efficiently.

The present disclosure has been described with reference to the embodiments shown in the drawings, which, however, are merely illustrative, and those having ordinary skill in the art to which the present disclosure pertains will appreciate that various modifications and other equivalent embodiments are possible therefrom. Therefore, the true technical scope of protection of the present disclosure shall be determined by the following claims.

### [Description of Reference Numerals]

10: Cooktop case
11: Bottom portion
13: Side wall portion
20: Top plate
30: Heating unit
31: First heating unit
33: Second heating unit
35: Third heating unit
40: Control panel
41: Panel case
43: Elastic member
45: Supporter
50: Control unit
61: Main PCB
63, 64: Noise filter
65, 66: Inverter PCB
67: Cooling fan
100, 200, 300: Sensing module
110: Sensor
111: 3-axis sensor module
113: Sensor micom
115: Filter unit
117: Amplification unit
120, 220, 320: Sensor case
121: Case body
121a: Horizontal surface portion
121b: Vertical surface portion
121c: Catch protrusion
121d: Hook protrusion
123: Contact protrusion
125: First lifting support portion
126: Second lifting support portion
127: Sliding hook / 127a: Projecting portion / 127b: Connecting portion
130: Supporter
131: Supporter body
131a: Horizontal support portion
131b: Vertical support portion
131c: Support rib
133: First support rod
134: Second support rod
135: Support wall
136: Hook slot
140: Elastic member
222: Groove portion
250: Attachment material

## Claims

1. A cooking appliance comprising:
a cooktop case having a receiving space formed therein;
a top plate disposed above the cooktop case and covering the receiving space;
a heating unit having at least a portion thereof disposed in the receiving space and configured to heat a heating target placed on the top plate;
a sensor configured to generate a signal by detecting vibrations generated in the top plate; and
a control unit configured to control operation of the heating unit by reflecting knock input information identified based on the signal generated by the sensor.

2. The cooking appliance of claim 1, wherein the heating unit comprises at least one heating coil, and
with respect to a horizontal direction, the sensor is disposed between a side wall portion of the cooktop case and the heating coil, or is disposed between a plurality of the heating coils.

3. The cooking appliance of claim 1 or 2, wherein, with respect to a horizontal direction, the sensor is disposed between a side wall portion of the cooktop case and the heating unit, or is disposed between a plurality of the heating units arranged in the horizontal direction.

4. The cooking appliance of any one of preceding claims, wherein a pair of the heating units is disposed to be spaced apart in a lateral direction, and
with respect to the lateral direction, the sensor is disposed between the pair of heating units.

5. The cooking appliance of any one of preceding claims, further comprising:
an electrical component disposed between a pair of the heating units disposed to be spaced apart by a predetermined distance in a lateral direction,
wherein the sensor is disposed in a space surrounded by the pair of heating units and the electrical component.

6. The cooking appliance of any one of preceding claims, further comprising:
a control panel disposed further forward than at least one of a pair of the heating units disposed to be spaced apart in a lateral direction,
wherein the sensor is disposed in a space surrounded by the pair of heating units and the control panel.

7. The cooking appliance of any one of preceding claims, further comprising:
an electrical component disposed between a pair of the heating units disposed to be spaced apart by a predetermined distance in a lateral direction, and a control panel disposed further forward than the electrical component,
wherein the sensor is disposed in a space surrounded by the pair of heating units, the electrical component, and the control panel.

8. The cooking appliance of any one of preceding claims, further comprising:
a control panel having at least a portion thereof disposed in the receiving space,
wherein, with respect to a front-rear direction, the sensor is disposed at a position closer to the control panel than to a center in the front-rear direction of the receiving space.

9. The cooking appliance of any one of preceding claims, further comprising:
a sensor case supporting the sensor,
wherein at least a portion of the sensor case is in close contact with the top plate.

10. The cooking appliance of claim 9, wherein the sensor case comprises a horizontal surface portion disposed between the sensor and the top plate so as to block, and
the sensor is connected to the sensor case below the horizontal surface portion.

11. The cooking appliance of claim 9 or 10, wherein the sensor case comprises a case body connected to the sensor, and contact protrusions protruding from the case body toward the top plate, and
vibrations generated in the top plate are transmitted to the case body via the contact protrusions in contact with the top plate.

12. The cooking appliance of any one of claims 9 to 11, further comprising:
a supporter installed in the cooktop case and supporting the sensor case,
wherein at least a portion of the sensor case is in close contact with the top plate between the supporter and the top plate.

13. The cooking appliance of any one of claims 9 to 12, wherein the sensor case is coupled to the supporter so as to be movable in a direction closer to or further away from the top plate.

14. The cooking appliance of claim 1, further comprising:
a control panel having at least a portion thereof disposed in the receiving space,
wherein the sensor is disposed on the control panel.

15. The cooking appliance of claim 14, further comprising:
a sensor case supporting the sensor,
wherein the control panel comprises a circuit board and a panel case housing the circuit board, and
the sensor case is disposed to be connected to the panel case or is formed integrally with the panel case.
